Europäisches Patentamt

European Patent Office

Office européen des brevets

(11) Numéro de publication: **0 391 811**
**A1**

## (12) DEMANDE DE BREVET EUROPEEN

(21) Numéro de dépôt: **90420154.8**

(22) Date de dépôt: **28.03.90**

(51) Int. Cl.5: **C08L 27/06, C08K 5/00,**
**//(C08K5/00,5:09,5:09,5:07)**

(30) Priorité: **04.04.89 FR 8904652**

(43) Date de publication de la demande:
**10.10.90 Bulletin 90/41**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Gay, Michel**
**10 rue Henri Rolland**
**F-69100 Villeurbanne(FR)**

(74) Mandataire: **Vignally, Noel et al**
**Rhône-Poulenc Chimie Service Brevets**
**Chimie Centre de Recherches des Carrières**
**B.P. 62**
**F-69192 Saint-Fons Cédex(FR)**

(54) **Procédé de stabilisation des polymeres halogenes.**

(57) La présente invention concerne la stabilisation des polymères halogénés et les compositions de polymères halogénés ainsi stabilisés.

Plus précisément l'invention consiste en des compositions à base de polymère chloré stabilisé, caractérisées en ce qu'elles contiennent :

a) une quantité efficace d'au moins un composé organique du zinc ;

b) une quantité efficace d'au moins un composé organique de calcium, de baryum, de magnésium ou de strontium ;

b) une quantité efficace d'au moins un β-dicétonate de sodium.

L'invention permet d'allonger la plage de travail à chaud des polymères chlorés.

EP 0 391 811 A1

## PROCEDE DE STABILISATION DES POLYMERES HALOGENES

La présente invention concerne la stabilisation des polymères halogénés et les compositions de polymères halogénés ainsi stabilisés.

La stabilisation thermique des polymères halogénés et plus particulièrement des polymères chlorés par des sels de zinc ou de cadmium associés à des sels des métaux du groupe IIa de la classification périodique des éléments est connue depuis très longtemps. Cependant cette stabilisation s'est avérée être insuffisante pour les applications nécessitant une bonne résistance au jaunissement.

Pour améliorer cette résistance au jaunissement, il a été proposé d'adjoindre aux stabilisants primaires mentionnés précédemment des stabilisants organiques secondaires.

Parmi ces dernières les $\beta$-dicétones et les $\beta$-cétoaldéhydes sont particulièrement efficaces. Elles permettent d'obtenir des compositions incolores et dont la couleur n'évolue pratiquement pas pendant leur mise en forme. C'est pourquoi leur emploi est très général dans des applications telles que les bouteilles en polychlorure de vinyle.

Cependant il est parfois nécessaire de recycler les polymères chlorés, ce qui augmente la durée totale du traitement thermique auquel ils sont soumis.

D'autre part, lors de la mise en forme des composés de polymère chloré, il arrive que par suite d'un incident ou d'une mauvaise programmation du cycle de chauffage, le polymère soit soumis à une température plus élevée ou à une durée de traitement à chaud plus longue que normalement.

C'est pourquoi il s'avère qu'il serait extrêmement intéressant, pour les formulateurs de polymères chlorés, de disposer d'une plage de travail, c'est-à-dire de la période à chaud pendant laquelle la couleur initiale n'évolue pas ou très peu, plus longue qu'actuellement, tout en bénéficiant du caractère incolore et transparent apporté par les $\beta$-dicétones.

Différentes solutions ont été proposées et utilisées.

Ainsi la demande de brevet français FR-A-2 356 674 décrit l'adjonction d'un polyol, qui permet notamment d'allonger la résistance au noircissement, dite parfois résistance long-terme, et à un moindre égard de prolonger la plage de travail du polymère.

Cependant l'adjonction d'un polyol ne permet pas d'améliorer suffisamment la plage de travail dans toutes les compositions et notamment dans les compositions, qui comportent par exemple moins de 0,5 % de composé du zinc.

Il est également très courant d'introduire dans les compositions de polymères chlorés des huiles époxydées telles que l'huile de soja époxydée, qui permet également un allongement de la plage de travail du polymère à chaud.

Cependant un inconvénient de ces composés époxydes, notamment de l'huile de soja époxydée qui est très largement utilisée, est d'abaisser le point de ramollissement du polymère, en particulier lorsque des quantités importantes sont mises en oeuvre. Il est donc nécessaire de diminuer la quantité de ces adjuvants, tout en maintenant globalement l'effet bénéfique qu'ils présentent.

La présente invention permet d'allonger la plage de travail à chaud des polymères chlorés sans les inconvénients précédents, plus particulièrement dans les compositions dites rigides ou semi-rigides sans que pour autant l'invention soit limitée à ces compositions.

Plus précisément l'invention consiste en des compositions à base de polymère chloré stabilisé, caractérisées en ce qu'elles contiennent :

a) une quantité efficace d'au moins un composé organique du zinc ;

b) une quantité efficace d'au moins un composé organique de calcium, de baryum, de magnésium ou de strontium ;

b) une quantité efficace d'au moins un $\beta$-dicétonate de sodium.

Les polymères chlorés sont notamment le polychlorure de vinyle (PVC), le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

De manière générale tout type de PVC convient, quel que soit son mode de préparation : polymérisation en masse, en suspension, en dispersion ou de tout autre type et quelle que soit sa viscosité intrinsèque.

Les homopolymères du chlorure de vinyle peuvent également être modifiés chimiquement, par exemple par chloration.

De nombreux copolymères du chlorure de vinyle peuvent également être stabilisés contre les effets de la chaleur, c'est-à-dire le jaunissement et la dégradation. Ce sont en particulier les copolymères obtenus par copolymérisation du chlorure de vinyle avec d'autres monomères présentant une liaison éthylénique polymérisable, comme par exemple l'acétate de vinyle ou le chlorure de vinylidène ; les acides maléique ou fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement ces copolymères contiennent au moins 50 % en poids de motifs chlorure de vinyle et de préférence au moins 80 % en poids de motifs chlorure de vinyle.

Les compositions selon l'invention peuvent également contenir des mélanges à base de polymère chloré contenant des quantités minoritaires d'autres polymères, comme les polyoléfines halogénés ou les copolymères acrylonitrile-butadiène-styrène.

Le PVC seul ou en mélange avec d'autres polymères est le polymère chloré le plus largement utilisé dans les compositions de l'invention.

Les composés organiques du zinc sont de préférence les carboxylates et les phénolates de zinc.

Les plus couramment utilisés sont par exemple les sels de zinc des acides maléique, acétique, diacétique, propionique, hexanoïque, éthyl-2 hexanoïque, décanoïque, undécanoïque, laurique, myristique, palmitique, stéarique, oléique, ricinoléique, béhénique, hydroxystéarique, hydroxyundécanoïque, benzoïque, phénylacétique, paratertiobutylbenzoïque et salicylique ; les phénolates de zinc du phénol et des phénols substitués par un ou plusieurs radicaux alkyle, tels que les nonylphénols.

Pour des raisons pratiques ou pour des raisons économiques, on choisit de préférence parmi les composés organiques du zinc cités précédemment, le propionate de zinc, l'éthyl-2 hexanoate de zinc, le laurate de zinc, le stéarate de zinc, l'oléate de zinc, le ricinoléate de zinc, le benzoate de zinc, le paratertiobutylbenzoate de zinc, le salicylate de zinc, le maléate de zinc et de mono(éthyl-2 hexyle), les nonylphénates de zinc.

Généralement les composés organiques du zinc représentent de 0,005 % à 1 % en poids par rapport au polymère chloré, et de préférence de 0,01 % à 0,6 % en poids.

Les composés organiques du calcium, du baryum, du magnésium et du strontium sont de préférence les carboxylates et les phénolates de ces métaux.

Les plus couramment utilisés sont par exemple les sels de calcium, baryum, magnésium et strontium des des acides maléique, acétique, diacétique, propionique, hexanoïque, éthyl-2 hexanoïque, décanoïque, undécanoïque, laurique, myristique, palmitique, stéarique, oléique, ricinoléique, béhénique, hydroxystéarique, hydroxyundécanoïque, benzoïque, phénylacétique, paratertiobutylbenzoïque et salicylique ; les phénolates de calcium, baryum, magnésium et strontium du phénol et des phénols substitués par un ou plusieurs radicaux alkyle, tels que les nonylphénols.

Pour des raisons pratiques ou pour des raisons économiques, on choisit de préférence parmi les composés organiques de calcium, de baryum, de magnésium et de strontium cités précédemment les sels de calcium, de baryum et de magnésium des acides propionique, éthyl-2 hexanoïque, laurique, stéarique, oléique, ricinoléïque, benzoïque, paratertiobutylbenzoïque, salicylique, du maléate de mono(éthyl-2 hexyle) ainsi que les nonylphénates de calcium, baryum et magnésium.

Généralement les composés organiques du calcium, du baryum, du magnésium et du strontium représentent de 0,005 % à 5 % en poids par rapport au polymère chloré et de préférence de 0,02 % à 2 % en poids.

Pour les applications alimentaires et notamment pour les bouteilles en PVC, on utilisera les composés organiques du calcium ou les mélanges composés organiques du calcium/composés organiques du magnésium.

Les β-dicétonates de sodium que l'on utilise dans la présente invention sont tous les dérivés sodiques des β-dicétones et des β-cétoaldéhydes aromatiques, arylaliphatiques, aliphatiques ou cycliques.

On citera notamment les dérivés de sodium des composés décrits dans les brevets ou certificats d'addition français publiés sous les numéros FR 2 292 227, FR 2 324 681, FR 2 351 149, FR 2 352 025, FR 2 383 988 et FR 2 456 132 et dans les brevets européens EP 0 040 286 et EP 0 046 161.

Comme exemples non limitatifs de tels β-dicétonates de sodium, on peut citer les dérivés de sodium du benzoylstéaroylméthane, du dibenzoylméthane, de la benzoylacétone, du benzoyl méthyl-3 butanoylméthane, des méthoxycarbonylbenzoyl-benzoylméthanes, des bis-β-dicétones telles que le bis(acétylacéto)-1,4 butane, le bis(benzoylacéto)-1,8 octane, le bis(acétylacéto)-1,4 benzène.

Généralement les compositions selon l'invention comprennent de 0,005 % à 5 % en poids de β-dicétonate de sodium par rapport au polymère chloré. De préférence elles contiennent de 0,01 % à 2 % en poids de β-dicétonate de sodium par rapport au polymère chloré.

Parmi les dérivés métalliques, sels ou chélates de β-dicétones cités indifféremment dans l'art antérieur, les β-dicétonates de sodium présentent cette particularité intéressante d'allonger la plage de travail des polymères chlorés, sans pour autant avoir un effet néfaste sur la transparence et le caractère incolore initiaux desdits polymères.

Les compositions peuvent également contenir en plus du β-dicétonate de sodium, une β-dicétone. Celle-ci peut être la β-dicétone correspondant au β-dicétonate de sodium de la composition ou être différente. Généralement, la quantité totale de β-dicétonate de sodium et de β-dicétone de la composition est égale aux quantités indiquées précédemment pour le β-dicétonate de sodium seul.

Les compositions de l'invention peuvent comporter d'autres stabilisants thermiques secondaires tels que les polyols, les phosphites, les composés époxydés.

Les polyols ont généralement l'avantage d'allonger la durée de vie des polymères chlorés soumis à un traitement thermique.

Généralement il est préférable que les polyols utilisés aient un point d'ébullition supérieur à 150° C et de préférence supérieur à 170° C, à cause de la mise en oeuvre à température élevée des polymères chlorés.

A titre d'exemples de tels polyols on peut citer des triols comme le triméthylolpropane, le glycérol, l'hexanetriol-1,2,6, le butanetriol-1,2,4, le trishydroxyéthylisocyanurate ; des tétrols comme le pentaérythritol, le diglycérol ; des pentitols comme le xylitol, le tétraméthylolcyclohexanol ; des hexitols comme le mannitol, le sorbitol, le dipentaérythritol ; des polyols partiellement estérifiés par un acide carboxylique et dans la formule desquels au moins 3 fonctions hydroxyle sont libres ; des alcools polyvinyliques, notamment ceux dans lesquels il reste moins de 30 % en moles de groupes esters par rapport à l'ensemble de leurs groupes esters et hydroxyle et qui présentent une viscosité à 20° C en solution aqueuse à 4 % en poids comprise entre environ $4 \times 10^{-3}$ Pa.s et $60 \times 10^{-3}$ Pa.s.

Parmi ces polyols les préférés sont le xylitol, le mannitol, le sorbitol, le tétraméthylolcyclohexanol et les alcools polyvinyliques définis précédemment.

Lorsqu'il est présent dans les compositions selon l'invention, on utilise en général de 0,005 % à 1 % en poids de polyol par rapport au polymère chloré et de préférence de 0,01 % à 0,6 % en poids.

Les époxydes qui peuvent être utilisés dans les compositions selon l'invention sont généralement des composés complexes, habituellement des polyglycérides époxydés comme l'huile de soja époxydée qui est la plus fréquemment employée, l'huile de lin époxydée, les huiles de poisson époxydées, la talloil époxydée.

Les compositions selon l'invention peuvent comporter également des phosphites organiques, notamment des phosphites de trialkyle ou d'alkyle et de phényle ou de triphényle.

Parmi les plus intéressants, on peut citer :
- les diphosphites de pentaérythrityle et de dialkyle,
- les diphosphites de pentaérythrityle et de diphényle,
- les diphosphites de pentaérythrityle et de bis(ditertiobutyl-2,4 phényle),
- les diphosphites de tétraalkyle et de bis(phénylène-1,4) diméthylméthane,
- les diphosphites de tétraalkyle et de bis(dialkyl-2,5 phénylène-1,4) alkylméthane,
- le diphosphite de diphényle, (bis{(butoxy-2 éthoxy)-2 éthyle} et 4,4'-isopropylidènediphényle ;
- le diphosphite de tétrakis{(butoxy-2 éthoxy)-2 éthyle} et 4,4'-isopropylidènediphényle ;
- le triphosphite de diphényle, tris{(butoxy-2 éthoxy)-2 éthyle} et bis(4,4'-isopropylidènediphényle) ;
- le tétraphosphite de diphényle, tétrakis{(butoxy-2 éthoxy)-2 éthyle} et tris(4,4'-isopropylidènediphényle) ;
- le diphosphite de diphényle, bis{(butoxy-2 éthoxy)-2 éthyle} et 4,4'-isopropylidènediphényle ;
- le diphosphite de tétrakis{(butoxy-2 éthoxy)-2 éthyle} et 4,4'-isopropylidènediphényle ;
- le triphosphite de diphényle, tris{(butoxy-2 éthoxy)-2 éthyle} et bis(4,4'-isopropylidènediphényle) ;
- le tétraphosphite de diphényle, tétrakis{(butoxy-2 éthoxy)-2 éthyle} et tris(4,4'-isopropylidènediphényle) ;
- le pentaphosphite de diphényle, pentakis{(butoxy-2 éthoxy)-2 éthyle} et tétrakis(4,4'-isopropylidènediphényle) ;
- l'hexaphosphite de diphényle, hexakis{(butoxy-2 éthoxy)-2 éthyle} et pentakis(4,4'-isopropylidènediphényle) ;
- le triphosphite de pentakis{(butoxy-2 éthoxy)-2 éthyle} et bis(4,4'-isopropylidènediphényle) ;
- le tétraphosphite d'hexakis{(butoxy-2 éthoxy)-2 éthyle} et tris(4,4'-isopropylidènediphényle) ;
- le diphosphite de bis(ditertiobutyl-2,4 phényle), bis{(butoxy-2 éthoxy)-2 éthyle} et 4,4'-isopropylidènediphényle) ;
- le diphosphite de bis(ditertiobutyl-2,6 phényle), bis{(butoxy-2 éthoxy)-2 éthyle} et 4,4'-isopropylidènediphényle).

Lorsqu'il est présent, le phosphite représente généralement de 0,05 % à 5 % en poids par rapport au polymère chloré et de préférence de 0,1 % à 2 % en poids.

Les compositions selon l'invention peuvent également comporter des adjuvants habituels tels que des antioxydants phénoliques ; des agents anti-UV tels que les benzophénones, les benzotriazoles ou les amines stériquement encombrées (habituellement connues sous le terme de HALS).

Comme indiqué précédemment, les compositions de l'invention qui sont plus particulièrement intéressantes sont les formulations rigides, c'est-à-dire sans plastifiant ou semi-rigides, c'est-à-dire avec des teneurs en plastifiant réduites. En effet une des applications, où ces compositions sont particulièrement adaptées, est la préparation de bouteilles notamment pour l'eau. Mais les compositions selon l'invention peuvent également être utilisées dans des formulations plastifiées, bien que dans ce cas le problème de la longueur de la plage de travail à chaud soit moins aigu que pour les formulations rigides ou semi-rigides.

De manière habituelle, l'incorporation des différents stabilisants ou adjuvants est faite sur le polymère chloré à l'état de poudre.

On peut bien entendu préparer un mélange de 2 ou plusieurs des composés constitutifs des compositions selon l'invention avant leur incorporation dans le polymère chloré.

Toutes les méthodes usuelles d'incorporation des différents stabilisants ou adjuvants dans le polymère peuvent être utilisées. Par exemple l'homogénéisation de la composition polymérique peut être réalisée sur malaxeur ou mélangeur à rouleaux, à une température telle que la composition devienne fluide, normalement entre 150°C et 200°C pour le PVC et pendant une durée suffisante, de l'ordre de quelques minutes à quelques dizaines de minutes.

Les compositions de polymère chloré, et plus particulièrement de PVC, peuvent être mises en oeuvre selon toutes les techniques utilisées habituellement comme par exemple l'extrusion, l'injection, l'extrusion-soufflage, le calandrage ou le moulage par rotation.

Les exemples qui suivent illustrent l'invention.

Exemples 1 et 2 et essais comparatifs

On prépare la composition de base A suivante :

| - PVC en poudre préparé par polymérisation en suspension et commercialisé sous la marque LACQVYL SO 71 S (indice de viscosité selon la norme NF T 51013:80) : | 1.000 g |
|---|---|
| - renforçateur de choc (copolymère butadiène/styrène/méthacrylate de méthyle) : | 80 g |
| - lubrifiant à base d'ester de colophane (cire E) : | 5 g |
| - huile de soja époxydée : | 40 g |
| - stéarate de calcium : | 3 g |
| - stéarate de zinc : | 3 g |

Après homogénéisation en mélangeur rapide à froid, on prélève 10 fractions de cette composition A. A chaque fraction on ajoute une quantité de stéaroylbenzoylméthane ou de dérivé de sodium (invention), de lithium, de potassium, de calcium (essais comparatifs) du stéaroylbenzoylméthane. Les quantités en poids pour 100 g de PVC sont indiquées dans le tableau I ci-après ; ces quantités ont été calculées pour que dans chaque composition il y ait la même quantité molaire de stéaroylbenzoylméthane.

On prépare à l'aide des différentes compositions ainsi obtenues, ainsi qu'avec la composition A non modifiée, des feuilles de 1 mm d'épaisseur par malaxage sur un mélangeur à 2 cylindres pendant 4 min à 180°C.

A partir d'éprouvettes (environ 1 cm x 2 cm) découpées dans ces feuilles, on effectue un test de vieillissement thermique en étuve ventilée à 180°C et l'on suit en fonction du temps l'évolution de la coloration GARDNER;

Le tableau I rassemble les indices de coloration GARDNER mesurés pour différentes durées de vieillissement ainsi que la durée avant noircissement total des échantillons testés.

L'examen des résultats montre que le dérivé de sodium du stéaroylbenzoylméthane est le seul dérivé métallique qui ralentit l'évolution du jaunissement de manière plus efficace que le stéaroylbenzoylméthane libre.

TABLEAU I

| ESSAIS | STABILISANTS β-DICETONIQUES | | INDICES GARDNER EN FONCTION DU TEMPS EN MIN | | | | | | | | |
|---|---|---|---|---|---|---|---|---|---|---|---|
| | Nature | Poids en g/100g PVC | 0 | 10 | 20 | 27 | 35 | 42 | 50 | 57 | Noir à |
| Témoin | Néant | -- | 4 | 6 | 6 | 6 | 6 | 7 | 9 | 9 | 65 min |
| Ex. 1 | SBM.Na | 0,212 | 0 | 0 | 1 | 2 | 3 | 5 | 6 | 8 | 73 min |
| Essai A1 | SBM * | 0,200 | 0 | 0 | 1 | 3 | 5 | 6 | 9 | bords noirs | 59 min |
| Essai A2 | SBM.Li | 0,202 | 0 | 0 | 1,5 | 3 | 8 | 10 | 11 | 12 | > 80 min |
| Essai A3 | SBM.K | 0,220 | 0 | 0 | 1 | 3 | 5 | 12 | 14 | 16 | > 80 min |
| Essai A4 | SBM.Ca | 0,210 | 0 | 0 | 1 | 3,5 | 6 | 7 | 9 | 11 | > 80 min |
| Ex. 2 | SBM.Na | 0,424 | 0 | 0 | 1 | 2 | 2,5 | 3,5 | 5 | 6 | 78 min |
| Essai A5 | SBM * | 0,400 | 0 | 0 | 1 | 2 | 4 | 7 | 10 | -- | 55 min |
| Essai A6 | SBM.Li | 0,404 | 0 | 0 | 1 | 3 | 5 | 7 | 10 | 11 | > 80 min |
| Essai A7 | SBM.K | 0,440 | 0 | 0 | 1 | 3 | 4 | 11 | 14 | 16 | > 80 min |
| Essai A8 | SBM.Ca | 0,420 | 0 | 0 | 1 | 3 | 5 | 7 | 10 | 11 | > 80 min |

* SBM = stéaroylbenzoylméthane

Exemples 3 et 4 et essais comparatifs

On prépare la composition de base B suivante :

| | |
|---|---|
| - PVC en poudre préparé par polymérisation en suspension et commercialisé sous la marque LACQVYL SO 71 S (indice de viscosité selon la norme NF T 51013:80) : | 1.000 g |
| - renforçateur de choc (copolymère butadiène/styrène/méthacrylate de méthyle) : | 80 g |
| - lubrifiant à base d'ester de colophane (cire E) : | 5 g |
| - huile de soja époxydée : | 40 g |
| - paratertiobutylbenzoate de calcium : | 4 g |
| - stéarate de zinc : | 3 g |

Après homogénéisation en mélangeur rapide à froid, on prélève 10 fractions de cette composition B. A chaque fraction on ajoute une quantité de dibenzoylméthane ou de benzoyl méthyl-3 butanoylméthane ou de dérivé de sodium (invention), de lithium, de potassium, de calcium (essais comparatifs) du dibenzoylméthane ou du benzoyl méthyl-3 butanoyl méthane. Les quantités en poids pour 100 g de PVC sont indiquées dans le tableau II ci-après ; ces quantités ont été calculées pour que dans chaque composition de chacune des séries, il y ait la même quantité molaire de dibenzoylméthane ou de benzoyl méthyl-3 butanoylméthane.

On prépare à l'aide des différentes compositions ainsi obtenues, ainsi qu'avec la composition B non modifiée, des feuilles de 1 mm d'épaisseur par malaxage sur un mélangeur à 2 cylindres pendant 4 min à 180°C.

A partir d'éprouvettes (environ 1 cm x 2 cm) découpées dans ces feuilles, on effectue un test de vieillissement thermique en étuve ventilée à 180°C et l'on suit en fonction du temps l'évolution de la coloration GARDNER.

Le tableau II rassemble les indices de coloration GARDNER mesurés pour différentes durées de vieillissement ainsi que la durée avant noircissement total des échantillons testés.

L'examen des résultats montre que le dérivé de sodium du dibenzoylméthane ou du benzoyl méthyl-3 butanoylméthane est le seul dérivé métallique qui ralentit l'évolution du jaunissement de manière plus efficace que le dibenzoylméthane ou le benzoyl méthyl-3 butanoylméthane libre.

TABLEAU II

| ESSAIS | STABILISANTS β-DICETONIQUES | | INDICES GARDNER EN FONCTION DU TEMPS EN MIN | | | | | | | | |
|--------|--------|--------|---|----|----|----|----|----|----|----|--------|
| | Nature | Poids en g/100g PVC | 0 | 10 | 20 | 27 | 35 | 42 | 50 | 57 | Noir à |
| Témoin | Néant | -- | 4 | 6 | 6 | 6 | 6 | 7 | 9 | 9 | 65 min |
| Ex. 3 | DBM.Na | 0,220 | 0,5 | 1,5 | 2 | 2,5 | 3 | 4 | 5 | 7 | 85 min |
| Essai B1 | DBM * | 0,200 | 0,5 | 1,5 | 3 | 3,5 | 4 | 6 | 7 | bords noirs | 60 min |
| Essai B2 | DBM.Li | 0,205 | 0,5 | 1,5 | 3 | 4 | 11 | 12 | 12 | 14 | > 90 min |
| Essai B3 | DBM.K | 0,234 | 0,5 | 1,5 | 2 | 3,5 | 12 | 14 | 14 | 16 | > 90 min |
| Essai B4 | DBM.Ca | 0,218 | 0,5 | 1,5 | 2 | 2,5 | 4 | 6 | 7 | 8 | > 90 min |
| Ex. 4 | BMBM.Na | 0,223 | 0 | 0 | 0,5 | 1 | 2 | 3 | 4 | 7 | 85 min |
| Essai B5 | BMBM ** | 0,200 | 0 | 0 | 0,5 | 2 | 4 | 5 | 6 | 9 | 67 min |
| Essai B6 | BMBM.Li | 0,206 | 0 | 0 | 0,5 | 2 | 6 | 8 | 10 | 11 | > 90 min |
| Essai B7 | BMBM.K | 0,240 | 0 | 0,5 | 1 | 2,5 | 5 | 11 | 13 | 15 | > 90 min |
| Essai B8 | BMBM.Ca | 0,220 | 0 | 0 | 0,5 | 2,5 | 4,5 | 6 | 9 | 9 | > 90 min |

* DBM = dibenzoylméthane
** BMBM = benzoyl méthyl-3 butanoylméthane

**Revendications**

1. Compositions à base de polymère chloré stabilisé, caractérisées en ce qu'elles contiennent :
   a) une quantité efficace d'au moins un composé organique du zinc ;
   b) une quantité efficace d'au moins un composé organique de calcium, de baryum, de magnésium ou de strontium ;
   b) une quantité efficace d'au moins un β-dicétonate de sodium.
2. Compositions selon la revendication 1, caractérisées en ce que les composés organiques du zinc sont les carboxylates et les phénolates de zinc.
3. Compositions selon la revendication 1, caractérisées en ce que les composés organiques du zinc sont les sels de zinc des acides maléique, acétique, diacétique, propionique, hexanoïque, éthyl-2 hexanoïque, décanoïque, undécanoïque, laurique, myristique, palmitique, stéarique, oléique, ricinoléique, béhénique, hydroxystéarique, hydroxyundécanoïque, benzoïque, phénylacétique, paratertiobutylbenzoïque et salicylique ; les phénolates de zinc du phénol et des phénols substitués par un ou plusieurs radicaux alkyle, tels que les nonylphénols.
4. Compositions selon l'une des revendications 1 à 3, caractérisées en ce que les composés organiques du zinc représentent de 0.005 % à 1 % en poids par rapport au polymère chloré, et de préférence de 0,01 % à 0,6 % en poids.
5. Compositions selon l'une des revendications 1 à 4, caractérisées en ce que les composés organiques du calcium, du baryum, du magnésium et du strontium sont les carboxylates et les phénolates de ces métaux.
6. Compositions selon l'une des revendications 1 à 4, caractérisées en ce que les composés organiques du calcium, du baryum, du magnésium et du strontium sont les sels de calcium, baryum, magnésium et strontium des des acides maléique, acétique, diacétique, propionique, hexanoïque, éthyl-2 hexanoïque, décanoïque, undécanoïque, laurique, myristique, palmitique, stéarique, oléique, ricinoléique, béhénique, hydroxystéarique, hydroxyundécanoïque, benzoïque, phénylacétique, paratertiobutylbenzoïque et salicylique ; les phénolates de calcium, baryum, magnésium et strontium du phénol et des phénols substitués par un ou plusieurs radicaux alkyle, tels que les nonylphénols.

7. Compositions selon l'une des revendications 1 à 6, caractérisées en ce que les composés organiques du calcium, du baryum, du magnésium et du strontium représentent de 0,005 % à 5 % en poids par rapport au polymère chloré et de préférence de 0,02 % a 2 % en poids.

8. Compositions selon l'une des revendications 1 à 7, caractérisées en ce que les β-dicétonates de sodium utilisés sont les dérivés sodiques des β-dicétones et des β-cétoaldéhydes aromatiques, arylaliphatiques, aliphatiques ou cycliques.

9. Compositions selon l'une des revendications 1 à 8, caractérisées en ce que les β-dicétonates de sodium utilisés sont les dérivés de sodium du benzoylstéaroylméthane, du dibenzoylméthane, de la benzoylacétone, du benzoyl méthyl-3 butanoylméthane, des méthoxycarbonylbenzoylbenzoylméthanes, des bis-β-dicétones telles que le bis(acétylacéto)-1,4 butane, le bis(benzoylacéto)-1,8 octane, le bis-(acétylacéto)-1,4 benzène.

10. Compositions selon l'une des revendications 1 à 9, caractérisées en ce qu'elles comprennent de 0,005 % à 5 % en poids de β-dicétonate de sodium par rapport au polymère chloré et de préférence de 0,01 % à 2 % en poids de β-dicétonate de sodium par rapport au polymère chloré.

11. Compositions selon l'une des revendications 1 à 10, caractérisées en ce qu'elles comprennent une β-dicétone libre.

12. Compositions selon l'une des revendications 1 à 11, caractérisées en ce qu'elles comprennent un polyol, choisi parmi les polyols ayant un point d'ébullition supérieur à 150°C et de préférence supérieur à 170°C, à raison de 0,005 % à 1 % en poids de polyol par rapport au polymère chloré et de préférence de 0,01 % à 0,6 % en poids.

13. Compositions selon l'une des revendications 1 à 12, caractérisées en ce qu'elles comprennent un polyol choisi parmi les triols comme le triméthylolpropane, le glycérol, l'hexanetriol-1,2,6, le butanetriol-1,2,4, le trishydroxyéthylisocyanurate ; les tétrols comme le pentaérythritol, le diglycérol ; les pentitols comme le xylitol, le tétraméthylolcyclohexanol ; les hexitols comme le mannitol, le sorbitol, le dipentaérythritol ; les polyols partiellement estérifiés par un acide carboxylique et dans la formule desquels au moins 3 fonctions hydroxyle sont libres ; les alcools polyvinyliques, notamment ceux dans lesquels il reste moins de 30 % en moles de groupes esters par rapport à l'ensemble de leurs groupes esters et hydroxyle et qui présentent une viscosité à 20°C en solution aqueuse à 4 % en poids comprise entre environ $4 \times 10^{-3}$Pa.s et $60 \times 10^{-3}$Pa.s.

14. Compositions selon l'une des revendications 1 à 13, caractérisées en ce qu'elles comprennent un phosphite organique choisi parmi les phosphites de trialkyle ou d'alkyle et de phényle ou de triphényle, représentant de 0,05 % à 5 % en poids par rapport au polymère chloré et de préférence de 0,1 % à 2 % en poids.

15. Compositions selon l'une des revendications 1 à 14, caractérisées en ce qu'elles comprennent un époxyde tel que des polyglycérides époxydés comme l'huile de soja époxydée, l'huile de lin époxydée, les huiles de poisson époxydées, la talloil époxydée.

16. Compositions selon l'une des revendications 1 à 15, caractérisées en ce que le polymère chloré utilisé est choisi parmi le polychlorure de vinyle, le polychlorure de vinylidène ; les copolymères comportant majoritairement des motifs chlorure de vinyle obtenus à partir de chlorure de vinyle et d'autres monomères ; les mélanges de polymères ou copolymères dont une partie majoritaire est obtenue à partir de chlorure de vinyle.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 6, no. 257 (C-140)[1135], 16 décembre 1982; & JP-A-57 151 635 (ADEKA ARGUS KAGAKU K.K.) 18-09-1982 * Résumé * & CHEMICAL ABSTRACTS, vol. 98, 1982, page 41, résumé no. 108345d, Columbus, Ohio, US --- | 1-3,6,8,9,12-16 | C 08 L 27/06 C 08 K 5/00 // (C 08 K 5/00 C 08 K 5:09 C 08 K 5:09 C 08 K 5:07 ) |
| A | EP-A-0 256 872 (KYOWA CHEMICAL INDUSTRY CO.) * Revendications; examples 1-4; page 3, lignes 61-62 * --- | 1-16 | |
| A | EP-A-0 005 678 (RHONE-POULENC) * Page 1, lignes 17-23 * ----- | 1-16 | |

| DOMAINES TECHNIQUES RECHERCHES (Int. Cl.5) |
|---|
| C 08 K C 08 L |

Le présent rapport a été établi pour toutes les revendications

| Lieu de la recherche | Date d'achèvement de la recherche | Examinateur |
|---|---|---|
| LA HAYE | 28-05-1990 | WILSON A.J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)